# EUROPÄISCHE PATENTSCHRIFT

(11) **EP 3 301 409 B1**
(45) Veröffentlichungstag und Bekanntmachung des Hinweises auf die Patenterteilung: **16.03.2022**
(21) Anmeldenummer: 17185512.5
(22) Anmeldetag: 09.08.2017
(51) Int. Cl.: G01F 1/58, G01F 15/14

(54) **MESSROHR ZUM EINSETZEN IN EINE MESSROHRAUFNAHME EINES MAGNETISCH-INDUKTIVEN DURCHFLUSSMESSGERÄTS UND MAGNETISCH-INDUKTIVES DURCHFLUSSMESSGERÄT**
MEASURING TUBE FOR INSERTION INTO A MAGNETIC-INDUCTIVE FLOW METER AND MAGNETIC-INDUCTIVE FLOW METER
TUBE DE MESURE À INSERER DANS UN LOGEMENT DE TUBE DE MESURE D'UN DÉBITMÈTRE ÉLECTROMAGNÉTIQUE ET DÉBITMÈTRE MAGNÉTO-INDUCTIF

(30) Priorität: 25.09.2016 DE 102016118064
(43) Veröffentlichungstag der Anmeldung: 04.04.2018
(73) Patentinhaber: Krohne AG, 4019 Basel (CH)
(72) Erfinder: PERFTTI, Christine, 26300 Chatuzange le Goubet (FR)
(74) Vertreter: Gesthuysen Patentanwälte

(56) Entgegenhaltungen:
- DE-A1-102014 015 208
- US-A- 4 195 515
- US-A- 4 346 604

## Beschreibung

Die Erfindung betrifft ein Messrohr zum Einsetzen in eine Messrohraufnahme eines magnetisch-induktiven Durchflussmessgerätes und zum Führen eines Mediums, mit zwei Elektroden zum Abgreifen einer in dem Medium induzierten Spannung, wobei sich die Elektroden jeweils zumindest von einem Mediumkontaktbereich zu einem endseitigen Anschlusskontaktbereich zum Anschluss an eine Auswerteeinheit erstrecken, wobei die Elektroden beidseitig des Messrohres in einer senkrecht auf der Längsachse des Messrohres stehenden Elektrodenebene angeordnet sind und die Elektroden sich parallel zueinander und tangential zum Messrohr erstrecken. Des Weiteren betrifft die Erfindung ein magnetisch-induktives Durchflussmessgerät zur Bestimmung des Durchflusses eines durch ein auswechselbares Messrohr strömenden Mediums, mit einem Messgerätegehäuse, mit einer Magnetfelderzeugungseinheit zur Erzeugung eines das Messrohr durchsetzenden Magnetfeldes, mit einer in dem Messgerätegehäuse ausgebildeten Messrohraufnahme zur Aufnahme des auswechselbaren Messrohres, und mit in der Messrohraufnahme angeordneten Gegenkontakten zur Kontaktierung von von dem Messrohr umfassten Elektroden über Anschlusskontaktbereiche der Elektroden.

Magnetisch-induktive Durchflussmessgeräte sind seit langer Zeit bekannt. Das Messprinzip beruht auf der Kraftwirkung auf in dem strömenden Medium vorhandener Ladungen in einem Magnetfeld und der Messung der elektrischen Potenzialdifferenz, die durch die räumlichen Ladungstrennung erzeugt wird.

Es sind auch magnetisch-induktive Durchflussmessgeräte bekannt, die ein austauschbares Messrohr aufweisen, beispielsweise weil dies aus Hygienegründen erforderlich ist. Dies wird beispielsweise gezeigt in der DE 102013019067 A1. US 4,195,515 A und US 4,346,604 A offenbaren jeweils ein magnetisch-induktives Durchflussmessgerät mit einem Messrohr und einer Messrohraufnahme.

Es ist ohne Weiteres ersichtlich, dass ein magnetisch-induktives Durchflussmessgerät mit einem austauschbaren Messrohr besonders sorgfältig konstruiert und ausgelegt sein muss, insbesondere hinsichtlich seiner mechanischen Auslegung. Prinzipbedingt besteht hier die Gefahr, dass Messungenauigkeiten allein daraus resultieren, dass das Messrohr nicht mit der gebotenen Präzision in die Aufnahme des korrespondierenden magnetisch-induktiven Durchflussmessgeräts eingesetzt worden ist. Auch die elektrische Kontaktierung der Elektroden des Messrohrs durch die Gegenkontakte der Messrohraufnahme kann kritisch sein. Es müssen hier reproduzierbare elektrische Kontaktierungen gewährleistet werden.

Die Aufgabe der Erfindung ist es, ein Messrohr zum Einsetzen in eine Messrohraufnahme eines magnetisch-induktiven Durchflussmessgerätes und ein entsprechendes magnetisch-induktives Durchflussmessgerät anzugeben, die eine einfache und sichere Handhabung der Komponenten beim Einsetz- und Austauschvorgang des Messrohrs ermöglichen.

Die Aufgabe wird zunächst und im Wesentlichen bei dem erfindungsgemäßen Messrohr dadurch gelöst, dass die endseitigen Anschlusskontaktbereiche beider Elektroden einseitig einer Bezugsebene angeordnet sind, die senkrecht auf der Elektrodenebene steht und wobei die Mediumkontaktbereiche zumindest teilweise in der Bezugsebene liegen. Erfindungsgemäß wird also erreicht, dass eine Kontaktierung der Elektroden des Messrohres einseitig erfolgt. Durch diese Ausgestaltung wird erreicht, dass nur auf einer Seite des Messrohrs eine sichere Kontaktierung sichergestellt - und durch den Verwender überprüft - werden muss, was die Handhabung erleichtert.

An dieser Stelle wird darauf hingewiesen, dass die wesentlichen Vorteile des erfindungsgemäßen Messrohres teilweise besonders gut in Kombination mit der Messrohraufnahme des erfindungsgemäßen magnetisch-induktiven Durchflussmessgeräts zu erläutern sind. Aus diesem Grund wird bei der Beschreibung des Messrohres auch auf das erfindungsgemäße Durchflussmessgerät vorgegriffen, was in vollem Umfang erst in der zweiten Beschreibungshälfte behandelt wird.

Eine Ausgestaltung des Messrohres derart, dass die Anschlusskontaktbereiche beider Elektroden einseitig der definierten Bezugsebene liegen, also eine Kontaktierung der Elektroden des Messrohres einseitig erfolgt, bedingt, dass die an der Messrohraufnahme des magnetisch-induktiven Durchflussmessgerätes angeordneten Gegenkontakte ebenfalls einseitig angeordnet sind. Die daraus resultierenden Vorteile werden weiter unten beschrieben.

Bei dem erfindungsgemäßen Messrohr hat sich die Verwendung von Stabelektroden als besonders vorteilhaft herausgestellt. Die Stabelektroden sind beidseitig des Messrohres tangential an das Messrohr angegliedert, wobei sich der Mediumkontaktbereich der Elektroden im Wesentlichen mittig der Längserstreckung der Stabelektroden befindet. Die Verwendung von Stabelektroden, deren Mediumkontaktbereich im Wesentlichen mittig der Längserstreckung der Stabelektroden befindlich ist, ist vorteilhaft, weil sich der Abstand der Elektroden einfacher und genauer einstellen lässt, als wenn der Mediumkontaktbereich der Elektroden endseitig angeordnet ist, die Elektroden also senkrecht auf der Messrohroberfläche stehen.

Die erfindungsgemäßen Messrohre werden beispielsweise für Einmal-Anwendungen verwendet. Da es sich bei den Messrohren um "Wegwerfprodukte" handelt, sind die Materialkosten der Messrohre so gering wie möglich zu halten. Demnach bietet sich eine Fertigung der Messrohre aus einem Kunststoff an. Da es sich bei den zu vermessenden Medien um elektrisch leitfähige Medien handelt und das Messrohrmaterial - der Kunststoff - ein Isolator ist, muss dafür gesorgt werden, dass das Medium geerdet wird. Eine bevorzugte Ausgestaltung des erfindungsgemäßen Messrohres kennzeichnet sich demnach dadurch aus, dass ein Erdungskontakt zur Erdung des Mediums an dem Messrohr angeordnet ist. Insbesondere hat der Erdungskontakt direkten Kontakt zu dem Medium. Des Weiteren ist der Erdungskontakt auf der Seite der Bezugsebene angeordnet, auf der auch die Anschlusskontaktbereiche der Elektroden angeordnet sind. Eine Kontaktierung des Erdungskontakts erfolgt also auch von der Seite aus, von der die Kontaktierung der Anschlusskontaktbereiche der Elektroden erfolgt. Durch den so angeordneten Erdungskontakt bleiben die Vorteile der einseitigen Kontaktierung vollständig erhalten.

Eine bevorzugte Ausgestaltung des erfindungsgemäßen Messrohres ist dadurch gekennzeichnet, dass eine Positioniervorrichtung zur Positionierung des Messrohres in der Messrohraufnahme des magnetisch-induktiven Durchflussmessgerätes umfasst ist. Mithilfe der Positioniervorrichtung kann das Messrohr reproduzierbar in die Messrohraufnahme eingesetzt werden. Auch nach mehrmaliger Entnahme und wiederholtem Einsetzen des Messrohres bzw. von verschiedenen Messrohren in die Messrohraufnahme, befindet sich das Messrohr an der gleichen Stelle in der Messrohraufnahme.

Oftmals finden die erfindungsgemäßen Messrohre Anwendung im Bereich der Medizin und der Pharmazie. Für einige Anwendungen ist es notwendig, dass die Messrohre steril sind. Bei der Verwendung steriler Messrohre erweist sich die Positioniervorrichtung als vorteilhaft, weil eine Kalibrierung jedes einzelnen verwendeten Messrohres so nicht mehr durchgeführt werden muss. Dies gilt insbesondere unter der Voraussetzung, dass mehrere Messrohre identisch ausgebildet sind. So ist es möglich, das magnetisch-induktive Durchflussmessgerät mit einem Messrohr zu kalibrieren, das extra zu Kalibrierungszwecken dient und nicht steril sein muss. Nach durchgeführter Kalibrierung kann das unsterile Messrohr durch ein baugleiches steriles Messrohr ersetzt werden, das aufgrund der Positioniervorrichtung an der selben Stelle in der Messrohraufnahme positioniert ist, wie das zur Kalibrierung verwendete Messrohr. Eine Neukalibrierung ist dann nicht notwendig.

Die Positioniervorrichtung kann auf verschiedene Art und Weise ausgebildet sein. Eine bevorzugte Ausgestaltung des erfindungsgemäßen Messrohres ist dadurch gekennzeichnet, dass die Positioniervorrichtung als U-förmiger Positionierrahmen an dem Messrohr ausgebildet ist. Die U-Schenkel des Positionierrahmens werden jeweils von dem Messrohr durchdrungen. Insbesondere erstreckt sich der die U-Schenkel verbindende U-Boden von U-Schenkel zu U-Schenkel in axialer Richtung des Messrohres, wobei die durch den U-Boden definierte U-Boden-Ebene insbesondere senkrecht auf der Elektrodenebene und senkrecht auf der Bezugsebene steht.

Das Messrohr mit Positionierrahmen wird beispielsweise so in die Messrohraufnahme eingeführt, dass der Positionierrahmen in Ausnehmungen der Messrohraufnahme eingreift bzw. die Messrohraufnahme teilweise umgreift. Dadurch ergibt sich der Vorteil, dass das Messrohr aufgrund des Positionierrahmens Bewegungen parallel zu der U-Boden-Ebene in Längsrichtung des Messrohres sperrt. Die U-Schenkel und der U-Boden des Positionierrahmens können insbesondere als Scheiben ausgebildet sein.

Neben dem Messrohr betrifft die Erfindung ebenfalls ein magnetisch-induktives Durchflussmessgerät zur Bestimmung des Durchflusses eines durch ein auswechselbares Messrohr strömenden Mediums, mit einem Messgerätegehäuse, mit einer Magnetfelderzeugungseinheit zur Erzeugung eines das Messrohr durchsetzenden Magnetfeldes, mit einer in dem Messgerätegehäuse ausgebildeten Messrohraufnahme zur Aufnahme des auswechselbaren Messrohres, und mit in der Messrohraufnahme angeordneten Gegenkontakten zur Kontaktierung von von dem Messrohr umfassten Elektroden über Anschlusskontaktbereiche der Elektroden.

Bei dem magnetisch-induktiven Durchflussmessgerät ist die der Erfindung zugrunde liegende Aufgabe zunächst und im Wesentlichen dadurch gelöst, dass die Messrohraufnahme U-förmig ausgebildet ist, wobei das Magnetfeld die U-Schenkel zumindest teilweise senkrecht durchdringt, dass die Messrohraufnahme im Bereich der nicht verbundenen Enden der U-Schenkel eine Öffnung senkrecht zum Magnetfeld zur Aufnahme des Messrohres aufweist, und dass die Gegenkontakte an einem U-Schenkel ausgebildet sind.

Wenn es heißt, dass das Magnetfeld die U-Schenkel der Messrohraufnahme zumindest teilweise senkrecht durchdringt, dann kann das dadurch realisiert sein, dass die Magnetfelderzeugungseinheit Polschuhe umfasst, die bis in die U-Schenkel hinein reichen und somit selbst einen Teil der Messrohraufnahme bilden. So befindet sich in jedem der beiden U-Schenkel ein Polschuh, so dass das zwischen den Polschuhen verlaufende Magnetfeld die Messrohraufnahme zumindest teilweise senkrecht durchdringt. Zur Aufnahme des Messrohres in die Messrohraufnahme weist die Messrohraufnahme eine Öffnung auf, die sich senkrecht zum Magnetfeld erstreckt.

Dadurch, dass die Gegenkontakte an einem U-Schenkel ausgebildet sind, findet eine Kontaktierung des Messrohres einseitig statt. Das hat den Vorteil, dass die Zuführungen zu den Gegenkontakten nicht durch den Magnetkreis verlaufen und so eine Beeinflussung verringert wird.

Um das Messrohr in die Messrohraufnahme einzuführen und zu kontaktieren, wird das Messrohr zunächst durch eine Bewegung senkrecht zum Magnetfeld durch die Öffnung in die Messrohraufnahme eingebracht. Die Kontaktierung erfolgt dann anschließend durch eine Bewegung des Messrohres parallel zum Magnetfeld.

Eine bevorzugte Ausgestaltung des erfindungsgemäßen magnetisch-induktiven Durchflussmessgerätes ist dadurch gekennzeichnet, dass die Gegenkontakte federnd ausgebildet sind, derart, dass im kontaktierten Zustand des Messrohres die Gegenkontakte eine Federkraft auf die Anschlusskontaktbereiche der Elektroden des Messrohres ausüben. Bei dieser Ausgestaltung ergibt sich der Vorteil daraus, dass eine Kontaktierung der Elektroden flexibler erfolgt. Wären die Gegenkontakte nicht federnd ausgebildet, dann müssten das Messrohr und die Messrohraufnahme exakt so ausgebildet sein, dass die Anschlusskontaktbereiche der Elektroden und die Gegenkontakte exakt aufeinandertreffen, da bei minimalen Abweichungen eine Kontaktierung nicht mehr erfolgen könnte. Durch das Einbringen des Messrohres in die Messrohraufnahme werden die Gegenkontakte durch die Elektroden "nach unten gedrückt", nämlich dadurch, dass sich die Elektroden in den Bereich der ungespannten Gegenkontakte erstrecken und so die Gegenkontakte "gespannt" werden und eine Federkraft auf die Anschlusskontaktbereiche der Elektroden ausüben.

Bei einer weiteren bevorzugten Ausgestaltung ist vorgesehen, dass die Enden der Gegenkontakte, die mit den Anschlusskontaktbereichen der Elektroden des Messrohrs in elektrischen Kontakt treten, mechanisch kodiert sind, beispielseise entweder konisch ausgeformt oder aber konisch eingeformt sind. Entsprechend ist bei dem zuvor behandelten Messrohr dann erfindungsgemäß vorgesehen, dass die Anschlusskontaktbereiche der Elektroden mechanisch gegenkodiert sind, beispielsweise entweder konisch eingeformt oder aber konisch ausgeformt sind. Mechanische Kodierung und Gegenkodierungn entsprechen sich jedenfalls und bewirken, dass das Messrohr in der Messrohraufnahme allein schon durch Ausgestaltung der Anschlusskontaktbereiche selbstzentrierend in der Messrohraufnahme ist.

Eine weitere Ausgestaltung des erfindungsgemäßen magnetisch-induktiven Durchflussmessgerätes ist dadurch gekennzeichnet, dass die Messrohraufnahme einen Erdungsgegenkontakt zur Kontaktierung eines Erdungskontaktes an dem Messrohr umfasst. Der Erdungsgegenkontakt ist an dem U-Schenkel ausgebildet, an dem die Gegenkontakte ausgebildet sind. Der Erdungsgegenkontakt ist dann notwendig, wenn das Messrohr aus einem isolierenden Material gefertigt ist und einen Erdungskontakt zur Erdung des leitungsfähigen Mediums aufweist. Der Erdungsgegenkontakt ist an dem gleichen U-Schenkel ausgebildet, an dem die Gegenkontakte zur Kontaktierung der Anschlusskontaktbereiche der Elektroden ausgebildet sind, um so zu gewährleisten, dass die durch die einseitige Kontaktierung der Elektroden des Messrohres erzielten Vorteile durch die Kontaktierung des Erdungskontaktes nicht verloren gehen, sämtliche Kontaktierungen also einseitig erfolgen.

Erfindungsgemäß kann bei einer Ausgestaltung des magnetisch-induktiven Durchflussmessgerätes vorgesehen sein, dass mindestens ein U-Schenkel und/oder der U-Boden der Messrohraufnahme ein Gegenhalteprofil aufweist, in das ein Positionierrahmen des Messrohres eingreifbar ist. Hierdurch kann das Messrohr reproduzierbar in der Messrohraufnahme positioniert werden, wodurch eine Verwendung von sterilen Messrohren ermöglicht wird, da nicht jedes Messrohr einzeln kalibriert werden muss.

Eine weitere Ausgestaltung des erfindungsgemäßen magnetisch-induktiven Durchflussmessgerätes ist dadurch gekennzeichnet, dass ein Verschlusselement zum Verschließen der Öffnung der Messrohraufnahme umfasst ist. Dadurch wird verhindert, dass das Messrohr aus der Öffnung hinausgleiten kann.

In einer Ausgestaltung ist vorgesehen, dass das Verschlusselement als schwenkbar an dem Messgerätegehäuse ausgebildete Klappe realisiert ist. Vorteilhaft ist, dass die Klappe frei von Anschlusskontakten ist, da die Kontaktierung der Anschlusskontaktbereiche der Elektroden durch die Gegenkontakte der Messrohraufnahme erfolgt.

Die Klappe weist insbesondere ein Profil zur Aufnahme des Messrohres auf. Hierdurch wird erreicht, dass das Messrohr in der Messrohraufnahme für Bewegungen in Erstreckungsrichtung der Elektroden blockiert ist.

Im Einzelnen gibt es nun verschiedene Möglichkeiten, das erfindungsgemäße Messrohr und das erfindungsgemäße magnetisch-induktive Durchflussmessgerät auszugestalten und weiterzubilden. Dazu wird verwiesen sowohl auf die den Patentansprüchen 1 und 9 nachgeordneten Patentansprüche als auch auf die Beschreibung bevorzugter Ausführungsbeispiele in Verbindung mit der Zeichnung. In der Zeichnung zeigen
- Fig. 1: eine perspektivische Ansicht eines erfindungsgemäßen Messrohres,
- Fig. 2: eine zweite perspektivische Ansicht des in Fig. 1 dargestellten Messrohres,
- Fig. 3a: eine erste Seitenansicht des in Fig. 1 dargestellten Messrohres,
- Fig. 3b: eine zweite Seitenansicht des in Fig. 1 dargestellten Messrohres,
- Fig. 4: eine Elektrode eines erfindungsgemäßen Messrohres,
- Fig. 5: ein Querschnitt durch ein erfindungsgemäßes Messrohr mit Elektroden,
- Fig. 6: ein erfindungsgemäßes magnetisch-induktives Durchflussmessgerät mit Verschlusselement und
- Fig. 7: das in Fig. 6 dargestellte magnetisch-induktive Durchflussmessgerät mit eingebauten Messrohr.

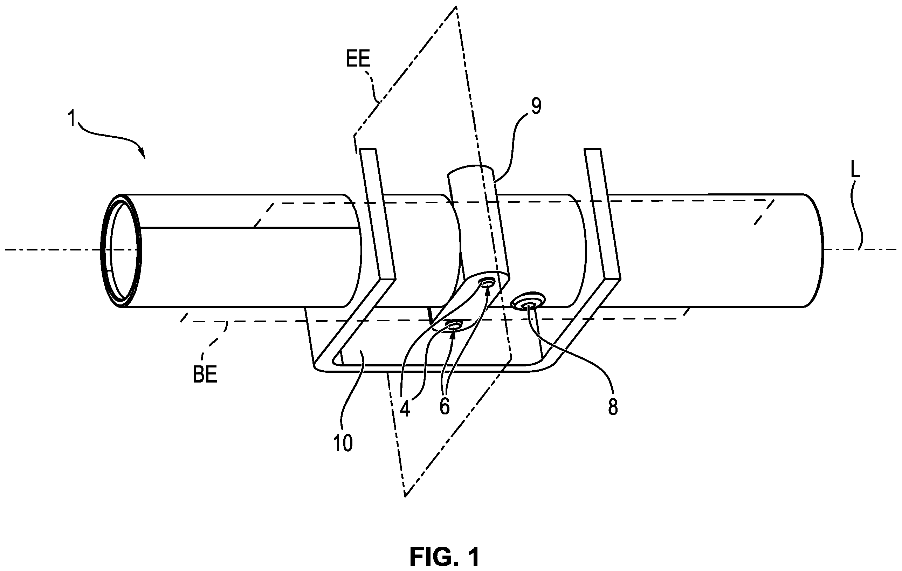

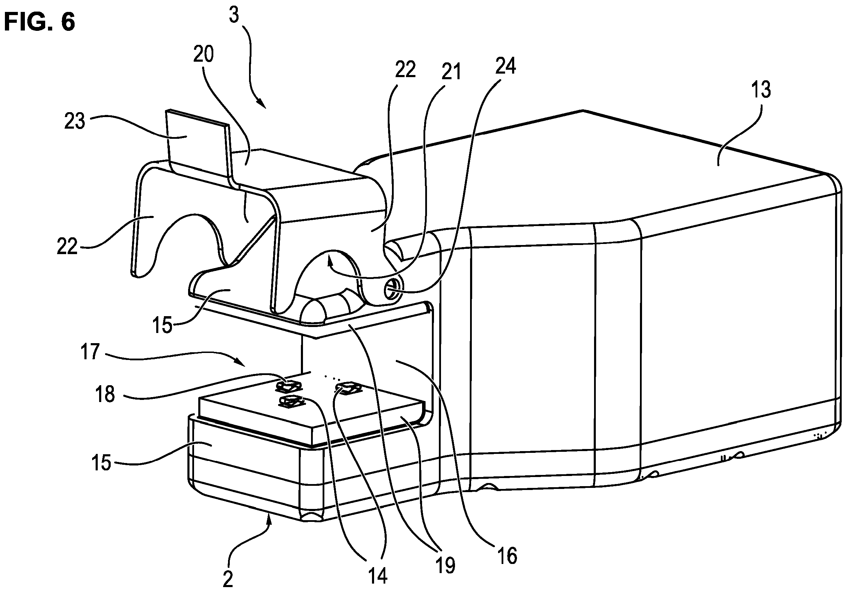

Fig. 1 zeigt eine perspektivische Ansicht eines erfindungsgemäßen Messrohres 1. Das Messrohr 1 ist einsetzbar in eine Messrohraufnahme 2 eines in den Figuren 6 bis 8 dargestellten magnetisch-induktiven Durchflussmessgerätes 3. Das Messrohr 1 dient zum Führen eines Mediums, dessen Durchfluss bestimmt werden soll. Des Weiteren kann das Messrohr 1 austauschbar in das magnetisch-induktive Durchflussmessgerät 3 eingesetzt werden und findet im Wesentlichen bei Einmalanwendungen Verwendung.

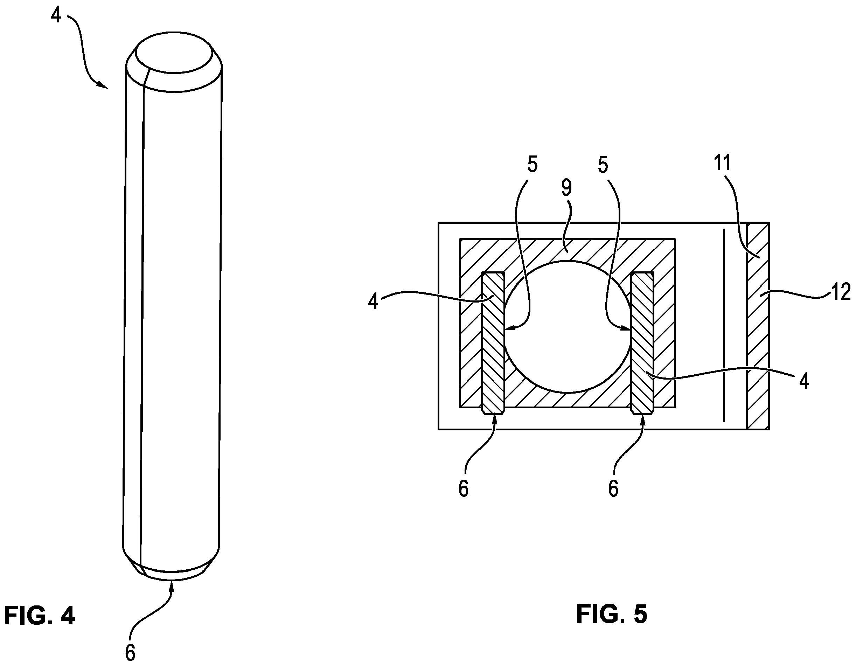

Das Messrohr 1 umfasst zwei Elektroden 4 zum Abgreifen einer in dem Medium induzierten Spannung. Hierzu stehen die Elektroden 4 über einen Mediumkontaktbereich 5 in Kontakt mit dem Medium, was in Fig. 1 nicht sichtbar, jedoch in Fig. 5 dargestellt ist. Die Elektroden 4 erstrecken sich von ihrem Mediumkontaktbereich 5 zu einem endseitigen Anschlusskontaktbereich 6. Der Anschlusskontaktbereich 6 der Elektroden 4 dient zum Anschluss der Elektroden 4 an eine Auswerteeinheit.

Die beiden Elektroden 4 sind stabförmig ausgebildet und liegen in einer Elektrodenebene EE, die senkrecht auf der Längsachse L des Messrohres 1 steht. Die Elektroden 4 sind beidseitig des Messrohres 1 angeordnet und erstrecken sich parallel zueinander. Des Weiteren erstrecken sich die Elektroden 4 tangential zum Messrohr 1. Hieraus ergibt sich, dass der Mediumkontaktbereich 5 der stabförmigen Elektroden 4 nicht endseitig gelegen ist, sondern im mittleren Bereich der Elektroden 4 liegt, was weiter unten in Verbindung mit Fig. 5 noch erläutert wird.

Die endseitigen Anschlusskontaktbereiche 6 der Elektroden 4 sind einseitig einer Bezugsebene BE angeordnet. Die Bezugsebene BE steht senkrecht auf der Elektrodenebene EE. Außerdem liegen die Mediumkontaktbereiche 5 der Elektroden 4 zumindest teilweise in der Bezugsebene BE. Im dargestellten Beispiel liegt die Längsachse L des Messrohres 1 ebenfalls in der Bezugsebene BE. Die Anordnung der Elektroden 4 parallel zueinander und beidseitig tangential zu dem Messrohr 1 mit dem Anschlusskontaktbereich 6 einseitig der Bezugsebene BE hat den großen Vorteil, dass die Elektroden 4 nur einseitig kontaktiert werden, wobei dieser Vorteil besonders ersichtlich wird in Zusammenschau mit dem magnetisch-induktiven Durchflussmessgerät 2, in welches das Messrohr 1 eingesetzt wird. Durch die Form der Elektroden 4 ist ein einseitiges Kontaktieren sehr einfach umsetzbar, ohne die Elektroden 4 mit zusätzlichen Anschlüssen versehen zu müssen oder ohne die Elektroden 4 in eine Form bringen zu müssen - beispielsweise um das Messrohr biegen - die mechanisch weniger stabil ist.

Das Messrohr 1 ist aus einem Kunststoff gefertigt. Da es sich bei dem Medium um ein elektrisch leitfähiges Medium handelt, ist ein Erdungskontakt 8 an dem Messrohr 1 angeordnet. Der Erdungskontakt 8 dient zur Erdung des Mediums und steht in direktem Kontakt zum Medium. Auf der dem Medium abgewandten Seite des Messrohres 1 ist der Erdungskontakt 8 kontaktierbar. Der Erdungskontakt 8 ist auf der gleichen Seite der Bezugsebene BE angeordnet, auf der auch die Anschlusskontaktbereiche 6 der Elektroden 4 angeordnet sind. Dadurch ergibt sich der Vorteil, dass sämtliche Kontaktierungen des Messrohres 1 einseitig erfolgen, ebenfalls die Kontaktierung zur Erdung des Mediums. Die Elektroden 4 selbst sind in einer Elektrodentasche 9 angeordnet, die einstückig mit dem Messrohr 1 ausgebildet ist.

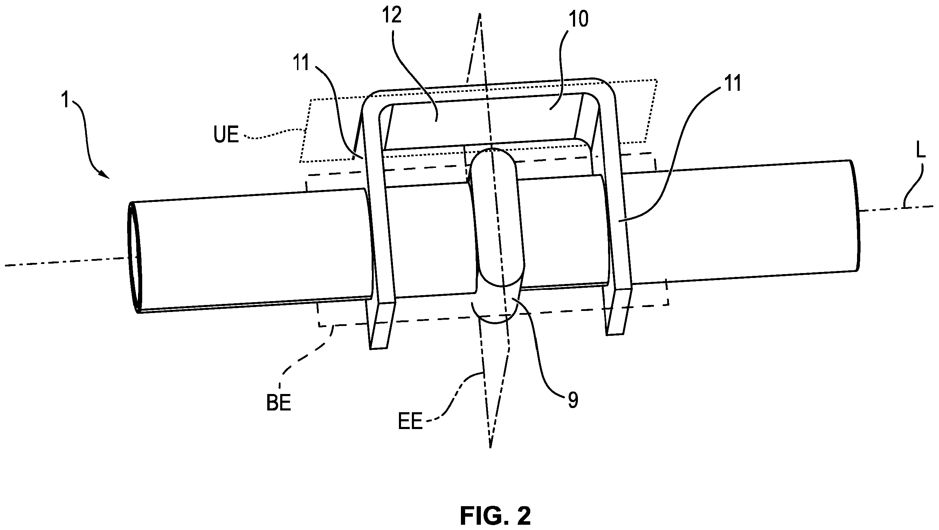

Um das Messrohr 1 präzise in der Messrohraufnahme 2 des magnetisch-induktiven Durchflussmessgerätes 3 zu positionieren, weist das Messrohr 1 eine Positioniervorrichtung in Form eines Positionierrahmens 10 auf. Der Positionierrahmen 10 ist besonders gut in Fig. 2 zu sehen, in der eine weitere perspektivische Ansicht des Messrohres 1 dargestellt ist. Das Messrohr 1 ist so dargestellt, dass die Oberseite des Messrohres 1 sichtbar ist. Demnach sind die Anschlusskontaktbereiche 6 der Elektroden 4 und der Erdungskontakt 8 nicht sichtbar. Der Positionierrahmen 10 ist U-förmig an dem Messrohr 1 ausgebildet und umfasst zwei U-Schenkel 11 und einen U-Boden 12, wobei die U-Schenkel 11 von dem Messrohr 1 durchdrungen werden. Der U-Boden 12 selbst erstreckt sich zwischen den beiden U-Schenkeln 11 in axialer Richtung des Messrohres 1. Die von dem U-Boden 12 definierte U-Boden-Ebene UE steht senkrecht sowohl auf der Elektrodenebene EE als auch auf der Bezugsebene BE.

In der dargestellten Ausführungsform sind sowohl U-Schenkel 11 als auch der U-Boden 12 als Scheiben ausgeführt. Durch die Form des Positionierrahmens 10 kann das Messrohr 1 auf einfache Weise in der Messrohraufnahme 2 positioniert werden.

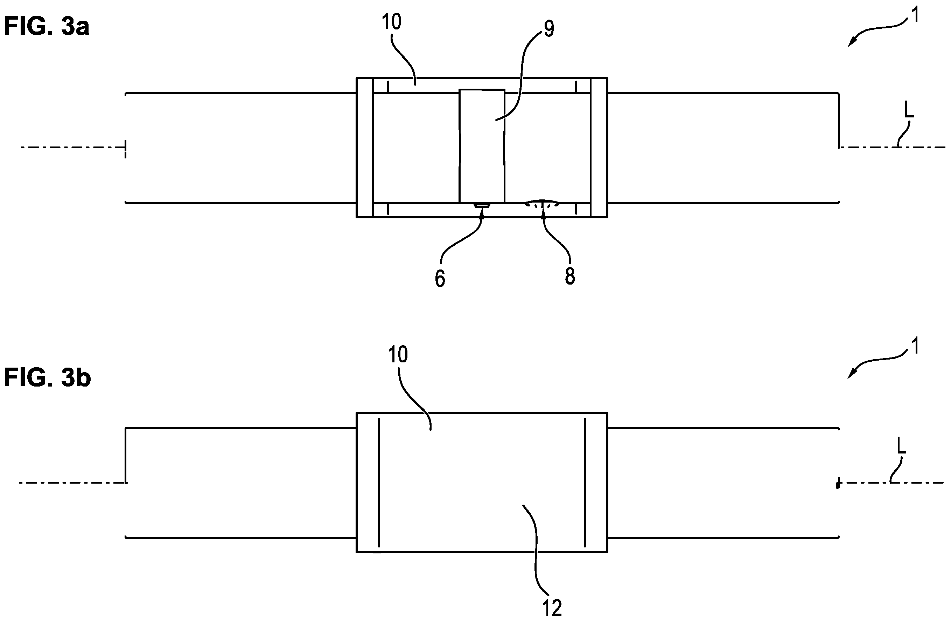

Fig. 3a und 3b zeigen jeweils eine Seitenansicht des in den Figuren 1 und 2 dargestellten Messrohres 1. In Fig. 3b ist der U-Boden 12 des Positionierrahmens 10 zu sehen.

In Fig. 4 ist eine Elektrode 4 des Messrohres 1 dargestellt. Die Elektrode 4 ist als runde Stabelektrode ausgeführt und symmetrisch aufgebaut. Die Elektrode 4 ist aus einem Metall gefertigt und elektrisch leitend. Eine Kontaktierung der Elektrode 4 kann demnach an jeder Stelle der Elektrode 4 realisiert werden. Bevorzugt wird zur Kontaktierung der Elektrode 4 ein endseitiger Anschlusskontaktbereich 6 verwendet, über den der elektrische Kontakt zur Elektrode 4 hergestellt wird.

Fig. 5 zeigt einen Querschnitt durch das Messrohr 1 entlang der Elektrodenebene EE. Besonders deutlich zu erkennen sind hier die Mediumkontaktbereiche 5 der Elektroden 4, mit denen die Elektroden 4 zum Abgreifen einer in dem Medium induzierten Spannung in direktem Kontakt zum Medium stehen.

In Fig. 6 ist ein magnetisch-induktives Durchflussmessgerät 3 dargestellt. Das magnetisch-induktive Durchflussmessgerät 3 umfasst ein Messgerätegehäuse 13 und eine nicht dargestellte, in dem Messgerätegehäuse 13 angeordnete Magnetfelderzeugungseinheit zur Erzeugung eines das Messrohr 1 durchsetzenden Magnetfeldes. Des Weiteren weist das magnetisch-induktive Durchflussmessgerät 3 eine Messrohraufnahme 2 zur Aufnahme des Messrohres 1 auf. Die Messrohraufnahme 2 ist U-förmig ausgebildet, weist also zwei U-Schenkel 15 und einen U-Boden 16 auf, so dass das Messrohr 1 "in das U eingelegt wird". Hierzu weist die Messrohraufnahme 2 eine Öffnung 17 auf. Außerdem ist die Magnetfelderzeugungseinheit so in dem Messgerätegehäuse 13 angeordnet, dass das Magnetfeld die U-Schenkel 15 senkrecht durchdringt. Das wird dadurch realisiert, dass die Magnetfelderzeugungseinheit Polschuhe aufweist, die sich jeweils in einen U-Schenkel 15 der Messrohraufnahme 2 erstrecken. Die Öffnung 17 der Messrohraufnahme 2 steht somit senkrecht zum Magnetfeld. Zur Kontaktierung des Messrohres 1 weist die Messrohraufnahme 2 zwei Gegenkontakte 14 auf. Die Gegenkontakte 14 sind an einem der U-Schenkel 15 ausgebildet, so dass eine Kontaktierung des Messrohres 1 einseitig erfolgt. Die Gegenkontakte 14 sind federnd ausgebildet. Befindet sich das Messrohr 1 im kontaktierten Zustand in der Messrohraufnahme 2, üben die Gegenkontakte 14 eine Federkraft auf die Anschlusskontaktbereiche 6 der Elektroden 4 aus. Dadurch kann gewährleistet werden, dass ein stabiler Kontakt zwischen den Anschlusskontaktbereichen 6 und den Gegenkontakten 14 hergestellt ist und der Kontakt mechanisch stabil und elektrisch beständig hergestellt ist, sodass eine zuverlässige Vermessung des Mediums erfolgen kann.

Zusätzlich zu den Gegenkontakten 14 ist an demselben U-Schenkel 15 ein Erdungsgegenkontakt 18 ausgebildet, der zur Kontaktierung des Erdungskontakts 8 des Messrohres 1 dient. Da das Messrohr 1 aus Kunststoff gefertigt ist, muss das elektrisch leitende Medium geerdet werden können.

Das Messrohr 1 wird durch eine Bewegung des Messrohres 1 senkrecht zum Magnetfeld in die Messrohraufnahme 2 eingeführt. Um eine Kontaktierung zwischen den Anschlusskontaktbereichen 6 der Elektroden 4 und den Gegenkontakten 14 herzustellen, muss das Messrohr 1 anschließend parallel zum Magnetfeld in Richtung auf die Gegenkontakte 14 bewegt werden, bis eine Kontaktierung erfolgt ist. Um das Messrohr 1 genau in der Messrohraufnahme 2 positionieren zu können - und so eine Kontaktierung und einen stabilen Sitz des Messrohres 1 gewährleisten zu können - weisen die U-Schenkel 15 ein Gegenhalteprofil 19 auf, in das der Positionierrahmen 10 des Messrohres 1 eingreifbar ist.

Um ein Herausrutschen des Messrohres 1 aus der Öffnung 17 der Messrohraufnahme 2 zu verhindern, weist das magnetisch-induktive Durchflussmessgerät 3 eine als Verschlusselement dienende Klappe 20 auf, mit der die Öffnung 17 der Messrohraufnahme 2 verschlossen werden kann. Die Klappe 20 ist schwenkbar an dem Messrohrgehäuse 3 angebracht, nämlich an Anbringsstellen 24, und wird zum Verschließen der Öffnung 17 nach unten geschwenkt. Die Klappe 20 weist ein Profil 21 zur Aufnahme des Messrohres 1 auf, sodass sich die Klappe 20 mit ihren seitlichen Wänden 22 um das Messrohr 1 schließt. Um die Klappe 20 leicht öffnen und schließen zu können, weist die Klappe 20 einen Griff 23 auf.

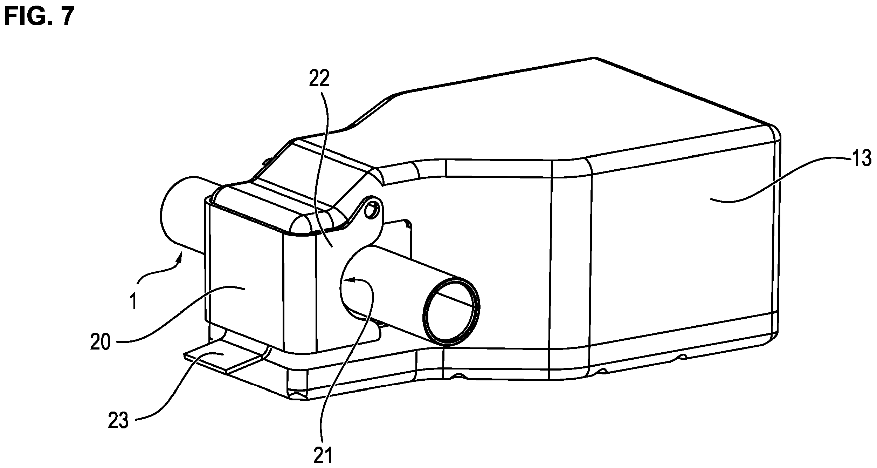

Fig. 7 zeigt das Messrohr 1 im eingebauten Zustand in der Messrohraufnahme 2 des magnetisch-induktiven Durchflussmessgerätes 3. Die Klappe 20 ist im geschlossenen Zustand. Das Messrohr 1 ist in dem Profil 21 der Klappe 20 gelagert. In dem gezeigten Zustand ist das Messrohr 1 verrutschsicher in die Messrohraufnahme 2 eingebracht.

### Bezugszeichen

- 1: Messrohr
- 2: Messrohraufnahme
- 3: MID
- 4: Elektroden
- 5: Mediumkontaktbereich Elektroden
- 6: Anschlusskontaktbereich Elektroden
- 8: Erdungskontakt
- 9: Elektrodentasche
- 10: Positionierrahmen
- 11: U-Schenkel
- 12: U-Boden
- 13: Messgerätegehäuse
- 14: Gegenkontakte
- 15: U-Schenkel
- 16: U-Boden
- 17: Öffnung
- 18: Erdungsgegenkontakt
- 19: Gegenhalteprofil
- 20: Klappe
- 21: Profil Klappe
- 22: seitliche Wände
- 23: Griff
- 24: Anbringstellen

## Patentansprüche

1. Messrohr (1) zum Einsetzen in eine Messrohraufnahme (2) eines magnetisch-induktiven Durchflussmessgerätes (3) und zum Führen eines Mediums, mit zwei Elektroden (4) zum Abgreifen einer in dem Medium induzierten Spannung, wobei sich die Elektroden (4) jeweils zumindest von einem Mediumkontaktbereich (5) zu einem endseitigen Anschlusskontaktbereich (6) zum Anschluss an eine Auswerteeinheit erstrecken, die Elektroden (4) beidseitig des Messrohres (1) in einer senkrecht auf der Längsachse (L) des Messrohres (1) stehenden Elektrodenebene (EE) angeordnet sind , **dadurch gekennzeichnet,**
**dass** die Elektroden (4) sich parallel zueinander und tangential zum Messrohr (1) erstrecken und dass die endseitigen Anschlusskontaktbereiche (6) beider Elektroden (4) einseitig einer Bezugsebene (BE) angeordnet sind, wobei die Bezugsebene (BE) senkrecht auf der Elektrodenebene (EE) steht, und wobei die Mediumkontaktbereiche (5) zumindest teilweise in der Bezugsebene (BE) liegen.

2. Messrohr (1) nach Anspruch 1, **dadurch gekennzeichnet, dass** ein Erdungskontakt (8) zur Erdung des Mediums an dem Messrohr (1) angeordnet ist, wobei der Erdungskontakt (8) auf der Seite der Bezugsebene (BE) angeordnet ist, auf der die Anschlusskontaktbereiche (6) der Elektroden (4) angeordnet sind, insbesondere wobei der Erdungskontakt (8) in direktem Kontakt zum Medium steht.

3. Messrohr (1) nach Anspruch 1 oder 2, **dadurch gekennzeichnet, dass** eine Positioniervorrichtung (10) zur Positionierung des Messrohres (1) in der Messrohraufnahme (2) des magnetisch-induktiven Durchflussmessgerätes (3) umfasst ist.

4. Messrohr (1) nach Anspruch 3, **dadurch gekennzeichnet, dass** die Positionierungsvorrichtung (10) als U-förmiger Positionierrahmen (10) mit zwei U-Schenkeln (11) und einem die U-Schenkel (11) verbindenden U-Boden (12) an dem Messrohr (1) ausgebildet ist, wobei die U-Schenkel (11) jeweils von dem Messrohr (1) durchdrungen werden, insbesondere wobei sich der die U-Schenkel (11) verbindende U-Boden (12) von U-Schenkel (11) zu U-Schenkel (11) in axialer Richtung des Messrohrs (1) erstreckt, insbesondere wobei die durch den U-Boden (12) definierte U-Boden-Ebene (UE) senkrecht auf der Elektrodenebene (EE) und senkrecht auf der Bezugsebene (BE) steht

5. Magnetisch-induktives Durchflussmessgerät (3) zur Bestimmung des Durchflusses eines durch ein auswechselbares Messrohr (1) strömenden Mediums, mit einem Messgerätegehäuse (13), mit einer Magnetfelderzeugungseinheit zur Erzeugung eines das Messrohr (1) durchsetzenden Magnetfeldes, mit einer in dem Messgerätegehäuse (13) ausgebildeten Messrohraufnahme (2) zur Aufnahme des auswechselbaren Messrohrs (1), und mit in der Messrohraufnahme (2) angeordneten Gegenkontakten (14) zur Kontaktierung von von dem Messrohr umfassten Elektroden (4) über Anschlusskontaktbereiche (6) der Elektroden (4), wobei die Messrohraufnahme (2) mittels zwei U-Schenkeln (15) und einem U-Boden (16) U-förmig ausgebildet ist, wobei das Magnetfeld die U-Schenkel (15) senkrecht durchdringt, wobei die Messrohraufnahme (2) im Bereich der nicht verbundenen Enden der U-Schenkel (15) eine Öffnung (17) senkrecht zum Magnetfeld zur Aufnahme des Messrohres (1) aufweist,
**dadurch gekennzeichnet,**
**dass** die Gegenkontakte (14) an dem selben U-Schenkel (15) ausgebildet sind.

6. Magnetisch-induktives Durchflussmessgerät (3) nach Anspruch 5, **dadurch gekennzeichnet, dass** die Gegenkontakte (14) federnd ausgebildet sind, derart, dass im kontaktierten Zustand des Messrohres (1) die Gegenkontakte (14) eine Federkraft auf die Anschlusskontaktbereiche (6) der Elektroden (4) des Messrohres (1) ausüben.

7. Magnetisch-induktives Durchflussmessgerät (3) nach Anspruch 5 oder 6, **dadurch gekennzeichnet, dass** die Messrohraufnahme (2) einen Erdungsgegenkontakt (18) zur Kontaktierung eines Erdungskontakts (8) an dem Messrohr (1) umfasst, wobei der Erdungsgegenkontakt (18) an dem U-Schenkel (15) ausgebildet ist, an dem die Gegenkontakte (14) ausgebildet sind.

8. Magnetisch-induktives Durchflussmessgerät (3) nach einem der Ansprüche 5 bis 7, **dadurch gekennzeichnet, dass** mindestens ein U-Schenkel (15) und/oder der U-Boden (16) der Messrohraufnahme (2) ein Gegenhalteprofil (19) aufweist, in das ein Positionierrrahmen (10) des Messrohres (1) eingreifbar ist.

9. Magnetisch-induktives Durchflussmessgerät (3) nach einem der Ansprüche 5 bis 8, **dadurch gekennzeichnet, dass** ein Verschlusselement zum Verschließen der Öffnung (17) der Messrohraufnahme (2) umfasst ist.

10. Magnetisch-induktives Durchflussmessgerät (3) nach Anspruch 9, **dadurch gekennzeichnet, dass** das Verschlusselement als schwenkbar an dem Messgerätegehäuse (13) ausgebildete Klappe (20) realisiert ist, wobei die Klappe (20) insbesondere ein Profil (21) zur Aufnahme des Messrohres (1) aufweist.

## Claims

1. Measuring tube (1) for insertion in a measuring tube receptacle (2) of a magnetic-inductive flowmeter (3) and for guiding a medium, with two electrodes (4) for tapping a voltage induced in the medium, wherein the electrodes (4) each extend at least from one medium contact area (5) to a connecting contact area (6) on one end for connection to an evaluating unit, the electrodes (4) are arranged on both sides of the measuring tube (1) in an electrode plane (EE) situated vertically on the longitudinal axis (L) of the measuring tube (1),
**characterized in**
**that** the electrodes (4) extend parallel to one another and tangential to the measuring tube (1)
**that** the connecting contact areas (6) on the ends of both electrodes (4) are arranged on one side of a reference plane (BE), wherein the reference plane (BE) is situated vertically on the electrode plane (EE), and wherein the medium contact areas (5) are located at least partially in the reference plane (BE).

2. Measuring tube (1) according to claim 1, **characterized in that** a grounding contact (8) for grounding the medium is arranged on the measuring tube (1), wherein the grounding contact (8) is arranged on the side of the reference plane (BE), on which the connecting contact area (6) of the electrodes (4) is located, in particular wherein the grounding contact (8) is in direct contact with the medium.

3. Measuring tube (1) according to claim 1 or 2, **characterized in that** a positioning device (10) is incorporated for positioning the measuring tube (1) in the measuring tube receptacle (2) of the magnetic-inductive flowmeter.

4. Measuring tube (1) according to claim 3, **characterized in that** the positioning device (10) is designed on the measuring tube (1) as a U-shaped positioning frame (10) having two U-legs (11) and a U-base (12) joining the U-legs (11), wherein the U-legs (11) are each penetrated by the measuring tube (1), in particular wherein the U-base (12) connecting the U-legs (11) extends from U-leg (11) to U-leg (11) in the axial direction of the measuring tube (1), in particular wherein the U-base plane (UE) defined by the U-base (12) is situated vertically on the electrode plane (EE) and vertically on the reference plane (BE).

5. Magnetic-inductive flowmeter (3) for determining the flow of a medium flowing through an exchangeable measuring tube (1), with a measuring device housing (13), with a magnetic field generator for generating a magnetic field permeating the measuring tube (1), with a measuring tube receptacle (2) designed in the measuring device housing (13) for receiving the exchangeable measuring tube (1), and with counter-contacts (14) arranged in the measuring tube receptacle (2) for contact to the electrodes (4) encompassed by the measuring tube via connecting contact areas (6) of the electrodes (4), wherein the measuring tube receptacle (2) is designed in a U-shape by means of the U-legs (15) and a U-base (16), wherein the magnetic field permeates the U-legs (15) vertically, wherein the measuring tube receptacle (2) has an opening (17) in the area of the non-connected ends of the U-legs (15) vertical to the magnetic field for receiving the measuring tube (1) **characterized in**
**that** the counter-contacts (14) is formed on the same U-leg (15).

6. Magnetic-inductive flowmeter (3) according to claim 5, **characterized in that** the counter-contacts (14) are flexibly designed, so that in the "in contact" state of the measuring tube (1), the counter-contacts (14) exert a spring force on the connecting contact areas (6) of the electrodes (4) of the measuring tube (1).

7. Magnetic-inductive flowmeter (3) according to claim 5 or 6, **characterized in that** the measuring tube receptacle (2) incorporates a grounding counter-contact (18) for contacting a grounding contact (8) on the measuring tube (1), wherein the grounding counter-contact (18) is formed on the U-leg (15), on which the counter-contacts (14) are formed.

8. Magnetic-inductive flowmeter (3) according to any one of claims 5 to 7, **characterized in that** at least one U-leg (15) and/or the U-base (16) of the measuring tube receptacle (2) has a counter holding profile (19), in which a positioning frame (10) of the measuring tube (1) can be engaged.

9. Magnetic-inductive flowmeter (3) according to any one of claims 5 to 8, **characterized in that** a closure element is incorporated for closing the opening (17) of the measuring tube receptacle (2).

10. Magnetic-inductive flowmeter (3) according to claim 9, **characterized in that** the closure element is implemented as a pivotable flap (20) formed on the measuring device housing (13), wherein the flap (20), in particular, has a profile (21) for receiving the measuring tube (1).

## Revendications

1. Tube de mesure (1) destiné à être inséré dans un logement de tube de mesure (2) d'un débitmètre magnéto-inductif (3) et à guider un fluide, comprenant deux électrodes (4) servant à prélever une tension induite dans le fluide, les électrodes (4) s'étendant respectivement au moins d'une zone de contact de fluide (5) à une zone de contact à borne côté extrémité (6), destinée à être connectée à une unité d'évaluation, les électrodes (4) étant disposées des deux côtés du tube de mesure (1) dans un plan d'électrodes (EE) perpendiculaire à l'axe longitudinal (L) du tube de mesure (1),
**caractérisé en ce que** les électrodes (4) s'étendent en parallèle l'une à l'autre et de manière tangentielle au tube de mesure (1), et **en ce que** les zones de contact à borne côté extrémité (6) des deux électrodes (4) sont disposées d'un côté d'un plan de référence (BE), le plan de référence (BE) étant perpendiculaire au plan d'électrodes (EE), et les zones de contact de fluide (5) se trouvant au moins partiellement dans le plan de référence (BE).

2. Tube de mesure (1) selon la revendication 1, **caractérisé en ce qu'**un contact de mise à la terre (8) pour la mise à la terre du fluide est disposé sur le tube de mesure (1), le contact de mise à la terre (8) étant disposé sur le côté du plan de référence (BE) sur lequel sont disposées les zones de contact à borne (6) des électrodes (4), le contact de mise à la terre (8) étant en particulier en contact direct avec le fluide.

3. Tube de mesure (1) selon la revendication 1 ou 2, **caractérisé en ce qu'**un dispositif de positionnement (10) servant à positionner le tube de mesure (1) dans le logement de tube de mesure (2) du débitmètre magnéto-inductif (3) est compris.

4. Tube de mesure (1) selon la revendication 3, **caractérisé en ce que** le dispositif de positionnement (10) est réalisé sous la forme d'un cadre de positionnement en forme de U (10) ayant deux branches de U (11) et une base de U (12) reliant les branches de U (11) sur le tube de mesure (1), les branches de U (11) étant respectivement traversées par le tube de mesure (1), la base de U (12) reliant les branches de U (11) s'étendant en particulier de branche de U (11) en branche de U (11) dans la direction axiale du tube de mesure (1), le plan de base de U (UE), défini par la base de U (12), étant en particulier perpendiculaire au plan d'électrodes (EE) et perpendiculaire au plan de référence (BE).

5. Débitmètre magnéto-inductif (3) servant à déterminer le débit d'un fluide s'écoulant à travers un tube de mesure (1) interchangeable, comprenant un boîtier d'appareil de mesure (13), une unité de génération de champ magnétique servant à générer un champ magnétique traversant le tube de mesure (1), un logement de tube de mesure (2) réalisé dans le boîtier d'appareil de mesure (13) et servant à recevoir le tube de mesure interchangeable (1), et des contre-contacts (14) disposés dans le logement de tube de mesure (2) et servant à la mise en contact d'électrodes (4) comprises dans le tube de mesure par l'intermédiaire de zones de contact à borne (6) des électrodes (4), le logement de tube de mesure (2) étant réalisé en forme de U au moyen de deux branches de U (15) et d'une base de U (16), le champ magnétique traversant les branches de U (15) perpendiculairement, le logement de tube de mesure (2) présentant au niveau des extrémités non reliées des branches de U (15) une ouverture (17) perpendiculaire au champ magnétique et servant à recevoir le tube de mesure (1), **caractérisé en ce que** les contre-contacts (14) sont réalisés sur la même branche de U (15).

6. Débitmètre magnéto-inductif (3) selon la revendication 5, **caractérisé en ce que** les contre-contacts (14) sont réalisés de manière élastique de telle sorte qu'à l'état mis en contact du tube de mesure (1), les contre-contacts (14) exercent une force de ressort sur les zones de contact à borne (6) des électrodes (4) du tube de mesure (1).

7. Débitmètre magnéto-inductif (3) selon la revendication 5 ou 6, **caractérisé en ce que** le logement de tube de mesure (2) comprend un contre-contact de mise à la terre (18) servant à la mise en contact d'un contact de mise à la terre (8) sur le tube de mesure (1), le contre-contact de mise à la terre (18) étant réalisé sur la branche de U (15) sur laquelle sont réalisés les contre-contacts (14).

8. Débitmètre magnéto-inductif (3) selon l'une quelconque des revendications 5 à 7, **caractérisé en ce qu'**au moins une branche de U (15) et/ou la base de U (16) du logement de tube de mesure (2) présente(nt) un profilé antagoniste (19) dans lequel peut s'enclencher un cadre de positionnement (10) du tube de mesure (1).

9. Débitmètre magnéto-inductif (3) selon l'une quelconque des revendications 5 à 8, **caractérisé en ce qu'**un élément de fermeture servant à fermer l'ouverture (17) du logement de tube de mesure (2) est compris.

10. Débitmètre magnéto-inductif (3) selon la revendication 9, **caractérisé en ce que** l'élément de fermeture est mis en œuvre sous la forme d'un clapet (20) réalisé pivotant sur le boîtier d'appareil de mesure (13), le clapet présentant (20) en particulier un profilé (21) servant à recevoir le tube de mesure (1) .
